# EUROPEAN PATENT APPLICATION

(11) **EP 4 668 299 A2**
(43) Date of publication of application: **24.12.2025**
(21) Application number: 25211794.0
(22) Date of filing: 20.01.2022
(51) Int. Cl.: H01F 38/14

(54) **MAGNETIC COMPONENT AND TRANSFORMER**

(62) Divisional of application: 22152432.5
(71) Applicant: Delta Electronics (Thailand) Public Co., Ltd., Samutprakarn 10280 (TH)
(72) Inventor: NJIENDE, Hugues, 33102 Paderborn (DE); TIKHONOV, Sergey, 59505 Bad Sassendorf (DE)
(74) Representative: Hoefer & Partner Patentanwälte mbB

(57) **Abstract**

The present invention concerns a magnetic component (1), especially for a wireless charging transformer, comprising a magnetic core (2), and at least one flat pre-wound major electrical coil (3) disposed on the magnetic core (2) and/or at least one minor electrical coil (4) wound around the magnetic core (2). The present invention also concerns a transformer (100) comprising the magnetic component (1) as a primary magnetic component (101) and/or as a secondary magnetic component (102).

## Description

The present invention concerns a magnetic component, especially for a wireless charging transformer, and a transformer, especially for wireless charging, which comprises the magnetic component.

Conventional wireless charging transformers comprise a primary side magnetic component and a secondary side magnetic component. The primary side magnetic component is commonly found in a wireless charging device, whereas the secondary side magnetic component is commonly found in a mobile device, for instance in a smartphone or automobile. Therein, the coupling factor, which correlates with an efficiency with which electric energy or power is transferred from the primary side to the secondary side, is commonly disadvantageously low. Furthermore, in automobile applications, the power necessary for charging the large batteries of electric vehicles is very high, such that common wireless charging transformers are not suited for automobile applications. Therein, due to their poor coupling factor, such wireless charging transformers are commonly not suited for transferring high amounts of electric power over a large air-gap, which is commonly found between the primary and secondary side magnetic components in automobile applications. Further, if the primary side and the secondary side magnetic component of conventional wireless charging transformers are not aligned nearly perfectly, the coupling factor is reduced dramatically. In addition, the conventional magnetic components comprise a high amount of ferrite material, which is expensive, heavy, and has a high volume or size. Copper losses as well as heat generation are also common problems associated with conventional magnetic components.

Further conventional magnetic components are known from for example US 2015/145343 A1, KR 2016 0039778 A, US 2009/309803 A1, US 2017/353061 A1, US 10 673 279 B2, US 2015/145339 A1, CN 103 474 213 A, US 2021/066967 A1 and DE 10 2013 113 244 A1.

It is an object of the present invention to provide a magnetic component, especially for a wireless charging transformer, which overcomes the aforementioned disadvantages. In particular, an object of the present invention is to provide a magnetic component with an improved coupling factor, reduced losses, low weight, low cost, and low heat generation. Further, it is an object of the present invention to provide a transformer, especially for wireless charging, with an improved coupling factor, reduced losses, low weight, low cost, and low heat generation.

The solution of these objects is solved by the features of the independent claims. The dependent claims contain advantageous embodiments of the present invention.

Aspects of the present invention concern a magnetic component, especially for a wireless charging transformer, wherein the magnetic component comprises a magnetic core and at least one flat pre-wound major electrical coil and/or at least one minor electrical coil. The at least one major electrical coil is disposed on the magnetic core - not wound around the magnetic core. The at least one minor electrical coil is wound around the magnetic core.

The magnetic component of the present invention has the advantage that the magnetic component has an improved coupling factor, reduced losses, low weight, low cost, and low heat generation.

The magnetic core of the magnetic component preferably comprises a center portion and at least one or more, preferably two or more, more preferably three or more, advantageously four or more leg portions which project from the center portion.

The leg portion(s) preferably project from side surfaces of the magnetic core. Therein, one or more leg portion(s) preferably project from a single side surface of the magnetic core. In other words, each or any one of the side surface(s) of the magnetic core has one or more leg portions projecting therefrom. For instance, two or more leg portions may project from a single side surface. In particular, any number of the side surfaces of the magnetic core may have two or more leg portions projecting therefrom. Preferably, any number of, especially all, side surfaces of the magnetic core has one leg portion projecting therefrom.

The leg portion(s) are preferably, in a direction parallel to a respective side surface of the center portion from which the respective leg portion(s) project, thinner than the center portion. Further preferably, the respective leg portion(s) are thinner or the same thickness as the center portion in a direction perpendicular to the respective side surface of the center portion.

The leg portions preferably each project from the center portion perpendicularly to a respective side surface of the center portion. Alternatively or in addition thereto, one or more, especially all, leg portions project at an angle from the side surface of the center portion. For example, an angle between a projection or extension direction of the leg portion and the respective side surface may be roughly 25° or 35° or 45° or 55° or 65°.

Preferably, the leg portions are formed integrally with the center portion of the magnetic core.

In an advantageous embodiment, the magnetic component comprises the at least one flat pre-wound major electrical coil.

Advantageously, each major electrical coil preferably comprises one electrical wire, which is insulated and wound around a major winding axis. The major electrical coil is wound so as to be flat. In other words, a cross-sectional width parallel to the major winding axis of the major electrical coil is preferably small. For instance, the cross-sectional width is preferably four or less, preferably three or less, preferably two or preferably one times the cross-sectional width of the electrical wire. In other words, the electrical wire is stacked in the cross-sectional direction parallel to the major winding axis four or less times. Preferably, the electrical wire is not stacked in the cross-sectional direction, corresponding to a cross-sectional width of one times the cross-sectional width of the electrical wire.

Preferably, a thickness parallel to the major winding axis, corresponding to a ring-width, of the major electrical coil is between and including 0.1 and 1.0 cm, preferably 0.1 and 0.5 cm, more preferably 0.2 and 0.4 cm, more preferably 0.3 cm. A width of the major electrical coil perpendicular to the major winding axis (i.e. a distance from an inner circumference to an outer circumference of the major electrical coil, also called "ring-thickness") is preferably between 1% and 30%, preferably between 3% and 25%, of the greatest dimension of the magnetic core perpendicular to the major winding axis.

Preferably, the major electrical coil is disposed so as to surround the center portion of the magnetic core. Preferably, the major winding axis of the major electrical coil is parallel, preferably coaxial, to an axis projecting perpendicularly from a top surface of the center portion, preferably projecting from a center point of the top surface of the center portion.

Advantageously, the major electrical coil has a shape substantially corresponding to a shape of the center portion. In this regard, "substantially corresponding" means that, for instance, in the case that the center portion is rectangular, the major electrical coil is also wound to a rectangular shape, preferably with rounded corners. For instance, in the case that the center portion is rounded or circular, the major electrical coil is also rounded or circular.

Preferably, the minor electrical coil(s) of the magnetic component comprise or consist of a foil, preferably copper foil. Further preferably, the minor electrical coil(s) of the magnetic component consist of wire, especially copper wire.

In one embodiment, the magnetic component comprises a plurality of the minor electrical coils. Therein, the minor electrical coils are respectively wound around the leg portions.

Preferably, the minor electrical coils are wound around a minor winding axis. The minor winding axis is preferably parallel to an extension or projection direction of the respective leg portion, around which the minor electrical coil(s) is/are wound.

Preferably, a plurality of minor electrical coils are wound respectively around any number of the leg portions, especially around each leg portion. In other words, on each leg portion preferably one or more minor electrical coils are positioned. Furthermore, different leg portions preferably include different numbers of minor electrical coils. For instance, one minor electrical coil may be respectively wound around one or more leg portion(s), whereas more than one minor electrical coil may be wound around one or more other leg portion(s).

In an advantageous embodiment, the magnetic core has, in plan view, a cross-potent-shape with a plurality of T-shaped leg portions projecting from the center portion. Each T-shaped leg portion comprises a first portion connected to the side surface of the center portion from which the leg portion projects. Further, each T-shaped leg portion comprises a second portion as a cross bar.

Preferably, the center portion of the cross-potent-shaped magnetic core is rectangular. More preferably, the center portion is square. Preferably, the center portion of the cross-potent-shaped magnetic core is a five or more sided polygon or a circle or an oval.

The second portion of each T-shaped leg portion is preferably disposed at the end of the first portion opposite to the center portion of the magnetic core. Preferably, the cross bar is disposed in an intermediate middle portion of the T-shaped leg portion such that the leg portion corresponds to a cross-shape or a plus-shape. In this case, the portions of the leg portions, in a direction along the extension direction of the leg portion, on either side of the second portion are also defined as first portions. In other words, such leg portions include, along their extension direction, a first portion, a second portion as a cross bar, and a further first portion.

Preferably, the second portion(s) of the leg portion(s) extend perpendicularly to an extension direction of the first portion(s). However, the second portion(s) of the leg portion(s) can also extend at a non-perpendicular angle from the first portion(s).

Further preferably, similar to the T-shape of the leg portions, the leg portions may be Y-shaped, for instance corresponding to a "forked cross" shape. Therein, the forked portions are defined as the foregoing described second portions of the leg portions.

Advantageously, the second portions are not necessarily bar-shaped. Preferably, the second portions comprise rounded edges. Further preferably, the second portions are oval-shaped. In an advantageous embodiment, the second portions have a five or more sided polygonal shape, wherein the second portions are, in a direction perpendicular to the extension direction of the first portion(s), longer than the width of the first portion(s) in the direction perpendicular to their extension direction.

Preferably, each leg portion comprises a plurality, especially two or more, first portions projecting from the center portion. The plurality of first portions are preferably parallel to one another.

Advantageously, the minor electrical coils are respectively wound around the first portion of the foregoing described leg portions.

Preferably, the major electrical coil(s) does/do overlap partially with the first portions of the leg portions. Preferably, the major electrical coil(s) does/do not overlap with the second portions of the leg portions.

In a preferable embodiment, the minor electrical coils are not wound around the second portions of the foregoing described leg portions. In other words, the minor electrical coils are preferably respectively wound around only the first portion(s) of the foregoing described leg portions.

Advantageously, a combined top surface area of all second portions of the leg portions, especially of the T-shaped leg portions or Y-shaped leg portions, is defined as X and a top surface area of the center portion of the magnetic core is defined as Y, wherein preferably a ratio of X/Y is between and including 0.7 and 1.3, preferably 0.8 and 1.2, preferably 0.9 and 1.1. Preferably, the ratio X/Y is 1. In other words, in the case of the ratio X/Y being 1, the combined top surface area of all second portions is equal to the top surface area of the center portion of the magnetic core.

Preferably, the minor electrical coils of the magnetic component cover between and including 1% and 30% or between and including 70% and 100% of the top surface area of the leg portions. In an advantageous embodiment, preferably when the magnetic component is employed as a primary side magnetic component, the minor electrical coils of the magnetic component cover between and including 1% and 30% of the top surface area of the leg portions. **In** this case, the major electrical coils of said primary side magnetic component preferably cover the remaining top surface area of the leg portions.

**In** a further advantageous embodiment, preferably when the magnetic component is employed as a secondary side magnetic component, the minor electrical coils of the magnetic component cover between and including 70% and 100% of the top surface area of the leg portions.

**In** a further advantageous embodiment, the minor electrical coils are wound around the leg portions, especially the T-shaped or Y-shaped leg portions, in plan view, between the center portion of the magnetic core and a portion of the major electrical coil. Preferably, the minor electrical coil is wound around the first portion of the respective leg portion within, in plan view, the circumference of the major electrical coil.

Further preferably, the minor electrical coils are wound around the leg portions, in plan view, between the major electrical coil and the second portion of the leg portions, especially of the T-shaped or Y-shaped leg portions. Preferably therein, in the case of multiple second portions for each leg portion, the minor electrical coils are wound around the first portion between the center portion of the magnetic core and the first second portion of the leg portion, specifically between the outer circumference of the major electrical coil and the first second portion. Preferably, further minor electrical coils are wound around further first portions of the leg portions.

Instead of the cross shape, the magnetic core preferably has a star-shape comprising five or more leg portions projecting from said center portion. Preferably, the leg portions projecting from the center portion of the star-shaped magnetic core comprise any one or a combination of the shapes of the leg portions discussed in the foregoing. Preferably, the magnetic core has a five or more sided center portion with T-shaped or Y-shaped leg portions.

Preferably, the center portion is five or more sided. Preferably, as discussed above, each side of the five or more sided center portion has one or more leg portions projecting therefrom.

Especially in the star shape core, the leg portions do not need to have crossbars. However, the leg portions may have an exposed area radially outside the minor electrical coils. Advantageously, a combined top surface area of all exposed areas radially outside the minor electrical coils, is defined as X and a top surface area of the center portion of the magnetic core is defined as Y, wherein preferably a ratio of X/Y is between and including 0.7 and 1.3, preferably 0.8 and 1.2, preferably 0.9 and 1.1. Preferably, the ratio X/Y is 1. In other words, in the case of the ratio X/Y being 1, the combined top surface area of all second portions is equal to the top surface area of the center portion of the magnetic core.

In an additional embodiment, the magnetic component comprises at least two of the major electrical coils and a plurality of the minor electrical coils. Therein, the minor electrical coils are respectively wound around the magnetic core, in plan view, within and/or outside the circumference of each of the major electrical coils. In addition or alternatively thereto, the minor electrical coils are preferably respectively wound around the magnetic core, in plan view, between the major electrical coils.

Preferably, the magnetic core has a rectangular, especially square or bar-shape. Preferably, the major electrical coils are disposed non-overlapping, preferably spaced from one another, on or above the top surface and/or a bottom surface of the magnetic core.

Advantageously, the minor electrical coils are wound so as to respectively have their minor winding axis perpendicular to the major winding axis of the major electrical coils. In other words, in the case that the major electrical coils are parallel on or above for instance the top surface of the magnetic core, the minor electrical coils are preferably wound around the magnetic core so as to have a portion extending along said top surface.

Preferably, the major electrical coils are rectangular with long and short sides. In this case, the minor electrical coils are preferably wound around the magnetic core so that the minor winding axis of the minor electrical coil is perpendicular to the long sides of the rectangular electrical coils.

In another embodiment, the magnetic core has, in plan view, a ladder shape comprising at least two main portions as side rails of the ladder shape. In addition, the magnetic core preferably has at least one, preferably two, three or more, connecting portion as a rung of the ladder shape and connecting the at least two main portions. Therein, the minor electrical coil(s) is/are preferably respectively wound around the connecting portion(s).

Preferably, the magnetic core comprises three or more main portions with connecting portions connecting a first main portion with a second main portion and a second main portion with a third main portion. The magnetic core preferably comprises a plurality of connecting portions between multiple main portions.

Preferably, the connecting portions project perpendicularly from side surfaces of the respective main portions. However, the connecting portions can also project at an angle non-perpendicularly from the respective main portions, so as to be slanted with respect to the main portions.

The connecting portions are preferably formed integrally with the main portions.

**In** a further embodiment, the magnetic core has, in plan view, preferably a ring-shape. Preferably, the magnetic core has a rectangular ring-shape. Further preferably, the magnetic core has a circular ring-shape. Even more preferably, the magnetic core has a five or more, especially six or more, sided ring-shape.

Preferably, the magnetic core has a closed ring shape - without air gap.

Preferably, the magnetic core is rectangular ring-shaped, wherein the magnetic component comprises four major electrical coils each disposed, in plan view, so as to surround a corner of the magnetic core.

Preferably, the magnetic core has a five or more sided ring shape with corresponding five or more corners connecting the sides of the magnetic core and preferably five or more major electrical coils each disposed, in plan view, so as to surround one corner of the magnetic core.

Preferably, the term "surrounding a corner in plan view" means that a winding axis of the major electrical coil coincides with an axis perpendicular on the top (or bottom) surface of the magnetic core and centered in the corner with respect to a ring-thickness of the magnetic core.

Further preferably, especially in the aforementioned case of a ring-shaped (rectangular, circular, etc.) magnetic core, the magnetic component comprises a plurality of minor electrical coils, wherein these are respectively disposed, in plan view, within an inner circumference of each major electrical coil. **In** addition or alternatively thereto, said magnetic component comprises a plurality of minor electrical coils respectively disposed, in plan view, between major electrical coils.

Preferably, the major electrical coil(s) is/are respectively tapered, in plan view, towards a center of the magnetic component, especially a center of the center portion of the magnetic core of the magnetic component.

Preferably, the tapered major electrical coils and/or the minor electrical coils are distributed evenly along a circumferential direction of the ring-shaped magnetic core.

**In** the foregoing described case of the magnetic core being ring-shaped (circular, rectangular, or five or more sided ring-shaped), the major electrical coils are preferably respectively tapered towards a center of the magnetic core in plan view. In other words, the major electrical coils are tapered in a direction from an outer circumference of the magnetic core towards an inner circumference of the magnetic core. Alternatively, one or more major electrical coils are preferably tapered in the opposite direction, from the inner circumference towards the outer circumference of the magnetic core. Preferably, along a circumferential direction of the magnetic core, the major electrical coils alternate between tapered towards the center of the magnetic core and tapered in the direction from the inner circumference to the outer circumference of the magnetic core.

Preferably, the major electrical coils are tapered by being triangular. More preferably, the major electrical coils are triangle-ring-shaped. Therein, the winding axis of the major electrical coils is defined as a center of the triangle.

Preferably, one or more, especially exactly one, minor electrical coil is provided for each side of the polygon magnetic core.

**In** another advantageous embodiment of the ring shaped magnetic core, the magnetic core comprises, in plan view, at least one elongated slit portion. Each such slit defines two connecting portions of the magnetic core surrounding the slit, i.e. on either side of the slit. Preferably, the magnetic component comprises one or more minor electrical coils wound around each of such connecting portions.

Further advantageously, portions of the magnetic core, around which minor electrical coils are wound, are raised in cross-sectional view of the magnetic core with respect to portions of the magnetic core around which no minor electrical coils are wound. In other words, the portions of the magnetic core around which minor electrical coils are wound are raised in a direction perpendicular to the minor winding axis of the respective minor electrical coils.

Preferably, the connecting portions of the magnetic core surrounding the aforementioned slit portions are raised with respect to portions of the magnetic core around which no minor electrical coils are wound.

Preferably, the magnetic component comprises holding elements, especially composed of a plastic and/or insulating material, which support the major electrical coils. Such holding elements are preferably disposed on the leg portions of the magnetic core.

Preferably, all major electrical coils are connected in electrical parallel with one another. Preferably, the minor electrical coils are connected in series to the major electrical coils. In symmetrical cases, where multiple major electrical coils are provided, and a whole number multiple of minor electrical coils is provided for each major electrical coil, each multiple of minor electrical coils is connected in series with one major electrical coil. For example, in the case where two major electrical coils and four minor electrical coils are provided, two of the four minor electrical coils are connected in series with the first major electrical coil, and the two other minor electrical coils are connected in series with the second major electrical coil, wherein the first major electrical coil (along with its two minor electrical coils) is connected in parallel with the second major electrical coil (along with its two minor electrical coils).

The magnetic core preferably comprises or consists of a ferromagnetic material, especially consists of a ferrite.

The foregoing described magnetic components have the advantage that due to the described shapes of the magnetic cores, an amount of ferrite material preferably comprising the magnetic cores, which is expensive and heavy, can be reduced. Further, the magnetic component according to any one of the foregoing embodiments provides an excellent coupling factor, thereby increasing the efficiency of electrical power transfer to a second magnetic component and also reducing losses, especially heat losses therein. Magnetic fringing fields can also be minimized in the magnetic component.

The major electrical coils have the advantage that a higher current can be carried by these. The minor electrical coils have the advantage that a higher voltage can be applied to these.

A plurality of minor electrical coils is preferably connected in parallel. Preferably, the major electrical coils, especially in a primary magnetic component, are connected in parallel for transferring more power.

Preferably, a number of major and/or minor electrical coils is predetermined based on power needs for the magnetic component.

The present invention further concerns a transformer. Preferably, the transformer is for wireless charging.

Preferably, the transformer comprises at least one magnetic component according to any one of the foregoing described embodiments. In particular, the transformer comprises least one magnetic component as a primary magnetic component or a secondary component. For instance, in case the transformer comprises the magnetic component as a primary magnetic component, which transmits electrical power, another magnetic component not corresponding to the foregoing described magnetic component may be employed as the secondary component. In other words, the magnetic component of the present invention can be employed as a primary side magnetic component for transmitting electrical power to any other magnetic component. On the other hand, the magnetic component of the present invention can preferably be employed as a secondary magnetic component of a transformer, thereby being preferably configured to receive electrical power transmitted by any other magnetic component.

Preferably, the transformer of the present invention comprises at least one magnetic component according to any one of the foregoing described embodiments as a primary side magnetic component for transmission of electrical power and comprises at least one magnetic component according to any one of the foregoing described embodiments as a secondary side magnetic component for reception of the electrical power transmitted by the primary side magnetic component.

Preferably, magnetic components not comprising major electrical coils are secondary side magnetic components of the transformer. Further preferably, magnetic components comprising major electrical coils are primary side magnetic components of the transformer.

The transformer is not specifically limited to being used for wireless charging. For instance, via configuration of the known parameters of the ideal or non-ideal transformer identity, the transformer is preferably configured as, for example, a step-up or step-down transformer or the like.

Preferably, the at least one primary magnetic component comprises at least one major electrical coil and a plurality of minor electrical coils. Further preferably, the at least one secondary magnetic component comprises a plurality of minor electrical coils and does not comprise any major electrical coils. In other words, the secondary magnetic component comprises only minor electrical coils.

Preferably, the minor electrical coils of the primary magnetic component consist of wires, especially copper wires. Further preferably, the minor electrical coils of the secondary magnetic component consist of foil, especially copper foil.

Preferably, the top surface area of the minor electrical coils of the secondary magnetic component directly above the leg portions is defined as A and the combined top surface area of the major electrical coils and the minor electrical coils of the primary magnetic component is defined as B, wherein preferably A ≤ B such that a ratio of A/B is preferably between and including 0.3 and 1.0, preferably 0.5 and 0.8, more preferably 0.6 and 0.7. In an advantageous embodiment, the ratio A/B is 1. In other words, in the case of the ratio A/B being 1, the top surface area of the minor electrical coils of the secondary magnetic component directly above the leg portions is the same as the combined top surface area of the major and minor electrical coils of the primary magnetic component. Preferably, the term "directly above the leg portions" corresponds to the portions of the respective coils which, in plan view, overlap with the respective leg portion(s) and does not include portions of the respective coils not overlapping with the respective leg portion(s).

Preferably, the primary magnetic component comprises a number C of major electrical coils and a number D of minor electrical coils, wherein C and D are whole numbers and D is preferably a multiple of C. Preferably, D is equal to one-half, preferably one, more preferably two, more preferably three, more preferably four or more, times C. C is preferably one, preferably two, preferably three, more preferably four or more.

Preferably, the transformer comprises two magnetic components as primary magnetic components for transmission of electrical power. Further preferably, the transformer comprises two magnetic components as secondary magnetic components for reception of the transmitted electrical power. Preferably, the two primary magnetic components are of the same configuration. Further preferably, the two secondary magnetic components are of the same configuration. Even more preferably, all primary and secondary magnetic components are of the same configuration.

Preferably, the primary magnetic component and the secondary magnetic component each comprise the cross-potent shaped magnetic core with a rectangular, especially square, center portion. Therein, the primary magnetic component preferably comprises one major electrical coil and eight minor electrical coils, wherein respectively two of the minor electrical coils are wound around one of the four, preferably T-shaped, leg portions. Further preferably, the minor electrical coils are wound around the first portion of the T-shaped leg portions. Preferably, one minor electrical coil (per leg portion) is disposed, in plan view, between the center portion and the inner circumference of the major electrical coil. The second minor electrical coil (per leg portion) is preferably disposed, in plan view, between the outer circumference of the major electrical coil and the second portion of the leg portion. Preferably, the second portion is a crossbar at the end of the first portion opposite to the center portion of the magnetic core. Preferably, the secondary magnetic component comprises only minor electrical coils. Therein, preferably, two of the minor electrical coils are respectively wound around one of the four leg portions of the magnetic core of the magnetic component.

Preferably, the transformer comprises the primary magnetic component and the secondary magnetic component each with the cross-potent shaped magnetic core with the rectangular, especially square, center portion. Preferably, the leg portions of the secondary magnetic component each include two first portions connected to a common side surface of the center portion as well as one second portion as a crossbar connecting the two first portions. Preferably, one minor electrical coil is wound around each first portion of each leg portion. The secondary magnetic component herein thus preferably comprises eight first portions, four second portions, and eight minor electrical coils.

Preferably, the transformer comprises the primary magnetic component and the secondary component each with the cross-potent shaped magnetic core with the rectangular, especially square, center portion. Preferably, both the primary magnetic component and the secondary component each comprise one major electrical coil surrounding the respective center portion and four minor electrical coils. In the primary magnetic component, the minor electrical coils are preferably disposed between an outer circumference of the major electrical coil and the second portion of the respective leg portion, around which the minor electrical coil is wound (per leg portion). Further, the minor electrical coils in the secondary magnetic component are preferably disposed between an inner circumference of the major electrical coil and the center portion of the magnetic core.

Preferably, in the above configuration, the primary magnetic component and the secondary magnetic component each comprise one major electrical coil surrounding the rectangular, especially square, center portion as well as, per leg portion, two minor electrical coils. Therein, per leg portion, one minor electrical coil is disposed in plan view between the center portion of the magnetic core and the inner circumference of the major electrical coil. The second minor electrical coils is disposed in plan view between the outer circumference of the major electrical coil and the second portion of the respective leg portion.

In a further advantageous embodiment, the primary magnetic component and the secondary magnetic component of the transformer each comprise the star-shaped magnetic core with a round, especially circular, center portion and eight leg portions. Each leg portion herein preferably comprises only the first portions. In other words, the leg portions preferably do not include crossbars (second portions). Further preferably, the primary magnetic component comprises one circular ring-shaped major electrical coil surrounding the center portion and one minor electrical coil on each leg portion. Preferably, the minor electrical coil is disposed, in a radial direction of the magnetic core, on the outside of the outer circumference of the major electrical coil. Preferably, the secondary magnetic component comprises one minor electrical coil wound respectively around each leg portion. In other words, the secondary magnetic component preferably comprises eight minor electrical coils, each wound around one leg portion.

In a further advantageous embodiment, the primary magnetic component of the transformer comprises a rectangular, especially bar-shaped magnetic core. The primary magnetic component further preferably comprises two major electrical coils, disposed in plan view parallel to one another on one top surface of the magnetic core. Further preferably, the primary magnetic component comprises a plurality of minor electrical coils, especially eight minor electrical coils. Preferably, the major electrical coils are rectangular in plan view with two long sides and two short sides. Two minor electrical coils, one inside the circumference and one outside the circumference of the major electrical coil, are disposed parallel to each long side of the major electrical coil. In other words, each long side of the major electrical coil is sandwiched by two minor electrical coils, wherein the winding axis of the minor electrical coils is perpendicular to the winding axis of the major electrical coils.

Preferably, in the foregoing transformer, the secondary magnetic component thereof comprises a ladder shaped magnetic core, wherein the magnetic core includes two main portions as side rails of the ladder shape and three connecting portions as rungs of the ladder shape. Further preferably, one minor electrical coil is wound around each connecting portion. Even more preferably, two minor electrical coils are wound around each connecting portion.

In a further advantageous embodiment, the primary magnetic component of the transformer preferably comprises the foregoing described rectangular magnetic core with two rectangular major electrical coils. Preferably therein, minor magnetic electrical coils outside the circumferences of the major electrical coils are disposed only between the major electrical coils. Therein, preferably two minor magnetic electrical coils are disposed between and outside of the circumferences of the two major electrical coils. Further, one or two minor electrical coils are disposed inside the circumference of each major electrical coil.

In a further advantageous embodiment, the primary magnetic component of the transformer preferably comprises a rectangular, especially square, ring-shaped magnetic core. Further preferably, the primary magnetic component comprises one major electrical coil for each corner of the magnetic core. Further, the primary magnetic component comprises a plurality, especially two, minor electrical coils between two respective major electrical coils on the outside of the circumferences of said major electrical coils. Further, said primary magnetic component preferably comprises two minor electrical coils within the inner circumference of each major electrical coil. Therein, the two minor electrical coils within the inner circumference of each major electrical are preferably disposed so as to be in plan view perpendicular to one another. Further, the secondary magnetic component of the transformer also comprises a rectangular, especially square, ring-shaped magnetic core. Preferably, the secondary magnetic core is thicker, especially 1.5 to 2, more preferably 1.7 to 1.8 times thicker than the primary magnetic core. The secondary magnetic component preferably includes four minor electrical coils, each wound around one of the four sides of the rectangular ring-shaped secondary magnetic core.

In a further preferred embodiment, the aforementioned secondary magnetic component comprises the rectangular ring-shaped secondary magnetic core and two minor electrical coils per side of the secondary magnetic core. Further, the two minor electrical coils are wound around raised portions of the magnetic core, wherein the raised portions are raised, in cross-sectional view perpendicular to the plan view, with respect to the remaining portions of the secondary magnetic core around which no minor electrical coils are wound.

Further preferably, the rectangular ring-shaped magnetic core of the secondary magnetic component comprises per side thereof one in plan view elongated slit portion. In other words, each slit portion is elongated in a direction parallel to the respective side of the magnetic core, in which it is disposed. A length of the slit, in the direction parallel to the respective side of the magnetic core, is equal to 0.8 to 1.2, preferably 0.9 to 1.1, even more preferably 1.0 times a length of an inner side of the respective side of the magnetic core (respective side forming part of the inner circumference of the magnetic core). In the case of the aforementioned length being 1 times the length of the inner side, the slit is in other words as long as a gap in the center of the magnetic core defining the ring-shape of the magnetic core. Each slit therefore defines two connecting portions of the magnetic core, respectively per side connecting two corners of the magnetic core. Preferably, one minor electrical coil is wound around each connecting portion. Preferably, the connecting portions are raised with respect to the corner portions of the magnetic core.

In another preferred embodiment, the primary magnetic component comprises the rectangular ring-shaped magnetic core. Therein, preferably, the primary magnetic component comprises four major electrical coils, one above each corner of the magnetic core. Preferably, the primary magnetic component further comprises eight minor electrical coils, wherein two minor electrical coils are disposed between two respective major electrical coils.

Preferably, the primary magnetic component comprises the rectangular ring-shaped magnetic core. Therein, preferably, the primary magnetic component comprises four major electrical coils, one above each corner of the magnetic core, wherein respective side surfaces of the major electrical coils are in contact with one another. Preferably two of these major electrical coils are in contact with one another. More preferably, two sets of two major electrical coils in contact with one another are provided in the primary magnetic component, wherein the major electrical coils of two different sets are not in contact with one another. In this case, preferably, one or more, especially two, minor electrical coils are provided between two major electrical coils, one out of each of the sets of two major electrical coils. In other words, two minor electrical coils are provided between major electrical coils not in contact with one another. More preferably, all major electrical coils are in contact with one another.

In another advantageous embodiment, the primary magnetic component of the transformer comprises a six sided (hexagonal) ring-shaped magnetic core. Further, the primary magnetic component comprises six, one for each side, major electrical coils. The major electrical coils are preferably tapered towards the center of the magnetic core. Preferably, in plan view, the major electrical coils are wedge-shaped or triangular. Further preferably, the secondary magnetic component of the transformer also comprises a hexagonal ring-shaped magnetic core. Preferably, the secondary magnetic component comprises six, one for each side, minor electrical coils. When overlapping the primary magnetic component and the secondary magnetic component, the secondary minor electrical coils are preferably disposed so as to, in plan view, overlap with gaps formed between the major electrical coils of the primary magnetic component. In other words, corners of the primary magnetic core preferably overlap with centers of the sides of the secondary magnetic core.

In another advantageous embodiment, the primary magnetic component of the transformer comprises a circular ring-shaped magnetic core and a plurality, especially eight, of tapered major electrical coils. Further, the secondary magnetic component also comprises a circular ring-shaped magnetic core and a plurality, especially eight, of minor electrical coils. The major and/or minor electrical coils are preferably distributed evenly along a circumferential direction of the respective magnetic core. When overlapping the primary and the secondary magnetic components, the minor electrical coils of the secondary magnetic component preferably overlap with gaps between the major electrical coils of the primary magnetic component.

The transformer according to any one of the foregoing embodiments has the advantage that excellent coupling ratios between the primary magnetic component and the secondary component can be achieved thereby. Further, the transformer has reduced material costs and reduced losses, especially heat losses. In particular, due to the generally large area of the flat major electrical coils, a shift between the primary and secondary magnetic components away from a perfect alignment of these has a reduced effect on the coupling factor between these. In other words, the range of shift from perfect alignment of the primary and secondary magnetic components is advantageously increased in the transformer of the foregoing embodiments.

Further details, advantages, and features of the preferred embodiments of the present invention are described in detail with reference to the figures. Therein:
- Fig. 1: shows a schematic plan view of a magnetic component according to a first embodiment of the present invention;
- Fig. 2: shows a schematic plan view of a magnetic component according to a second embodiment of the present invention;
- Fig. 3: shows a schematic plan view of a magnetic component according to a third embodiment of the present invention;
- Fig. 4: shows a schematic plan view of a magnetic component according to a fourth embodiment of the present invention;
- Fig. 5: shows a schematic plan view of a magnetic component according to a fifth embodiment of the present invention;
- Fig. 6: shows a schematic plan view of a magnetic component according to a sixth embodiment of the present invention;
- Fig. 7: shows a schematic plan view of a magnetic component according to a seventh embodiment of the present invention;
- Fig. 8: shows a schematic plan view of a magnetic component according to an eighth embodiment of the present invention;
- Fig. 9: shows a schematic plan view of a magnetic component according to a ninth embodiment of the present invention;
- Fig. 10: shows a schematic plan view of a magnetic component according to a tenth embodiment of the present invention;
- Fig. 11: shows a schematic plan view of a magnetic component according to an eleventh embodiment of the present invention;
- Fig. 12: shows a schematic plan view of a magnetic component according to a twelfth embodiment of the present invention;
- Fig. 13: shows a schematic plan view of a magnetic component according to a thirteenth embodiment of the present invention;
- Fig. 14: shows a schematic plan view of a magnetic component according to a fourteenth embodiment of the present invention;
- Fig. 15: shows a schematic plan view of a magnetic component according to a fifteenth embodiment of the present invention;
- Fig. 16: shows a schematic plan view of a magnetic component according to a sixteenth embodiment of the present invention;
- Fig. 17: shows a schematic plan view of a magnetic component according to a seventeenth embodiment of the present invention;
- Fig. 18: a schematic cross-sectional drawing of the magnetic component according to the seventeenth embodiment of the present invention;
- Fig. 19: shows a schematic plan view of a magnetic component according to an eighteenth embodiment of the present invention;
- Fig. 20: a schematic cross-sectional drawing of the magnetic component according to the eighteenth embodiment of the present invention;
- Fig. 21: shows a schematic plan view of a magnetic component according to a nineteenth embodiment of the present invention;
- Fig. 22: shows a schematic plan view of a magnetic component according to a twentieth embodiment of the present invention;
- Fig. 23: shows a schematic plan view of a magnetic component according to a twenty-first embodiment of the present invention;
- Fig. 24: shows a schematic plan view of a magnetic component according to a twenty-second embodiment of the present invention; and
- Fig. 25: shows a schematic diagram of a transformer of the present invention.

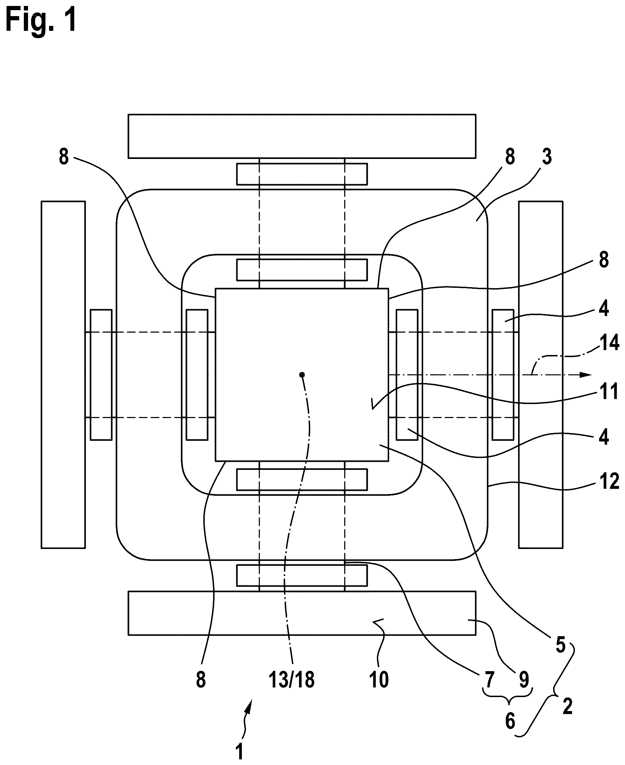

Fig. 1 shows a schematic plan view of a magnetic component 1 according to a first embodiment of the present invention.

The magnetic component 1 of the present embodiment comprises a magnetic core 2 with a cross-potent shape. Therein, the magnetic core 2 comprises a square center portion 5 and four leg portions 6.

The leg portions 6 each comprise a first portion 7 projecting from the center portion 5. In particular, each first portion 7 is connected to and projects from a side 8 of the center portion 5. Further, the leg portions 6 each comprise a second portion 9. The second portion 9 is a crossbar at the end of the first portion 7 opposite to the center portion 5.

A top area 10 of all second portions 9 combined is equal to a top area 11 of the center portion 5. Thereby, an advantageous flow of magnetic field lines between the second portions 9 and the center portion 5 can be provided.

Further, the magnetic component 1 of the present embodiment comprises one flat pre-wound major electrical coil 3 disposed on the magnetic core 2. The major electrical coil 3 is pre-wound, meaning it is not directly wound around an element of the magnetic component 1, but is rather separately wound and placed on the magnetic core 2. The magnetic component 1 further comprises holding elements (not shown), which hold the major electrical coil 3 in place, especially above the magnetic core 2. Such holding elements are preferably formed of an electrically insulating material.

As can be taken from Fig. 1, the major electrical coil 3 is disposed so as to surround the center portion 5 of the magnetic core 2. Further, the major electrical coil 3 overlaps with parts of the first portions 7 of the leg portions 6. The major electrical coil 3 does not overlap with the second portions 9 of the leg portions 6. Herein, a major winding axis 13 of the major electrical coil 3, around which the major electrical coil 3 is wound (pre-wound), projects from a center 18 of the center portion 5 of the magnetic core 2. In other words, the major winding axis 13 corresponds to a center axis of the center portion 5.

The magnetic component 1 further comprises eight minor electrical coils 4. The minor electrical coils 4 are defined as coils which are wound around portions of the magnetic core 2. The minor electrical coils 4 each surround the first portion 7 of the leg portions 6. Herein, two minor electrical coils 4 are provided for each leg portion 6. A minor winding axis 14 of each minor electrical coil 4 is parallel to an extension or projection direction of the respective first portion 7 of the leg portion 6.

Herein, for each leg portion 6, one minor electrical coil 4 is provided outside of a circumference 12 of the major electrical coil 3. Further, one minor electrical coil 4 is provided inside of the circumference 12 of the major electrical coil 3. In other words, one minor electrical coil 4 is disposed between the center portion 5 and a portion of the major electrical coil 3 and one minor electrical coil 4 is disposed between a portion of the major electrical coil 3 and the second portion 9 of the respective leg portion 6.

The cross-potent shape of the magnetic core 2 has the advantage that ferrite material, of which the magnetic core 2 is formed, can be saved, especially at the corners between two adjacent leg portions 6. In addition, the major electrical coil 3 has the advantage that a large area of winding can be covered thereby, thus increasing a coupling factor of the magnetic component 1.

The second portions 9 do not necessarily need to be disposed at the ends of the first portions 7 opposite to the center portion 5. Instead, these can be disposed anywhere along the first portions 7, for instance in the middle thereof.

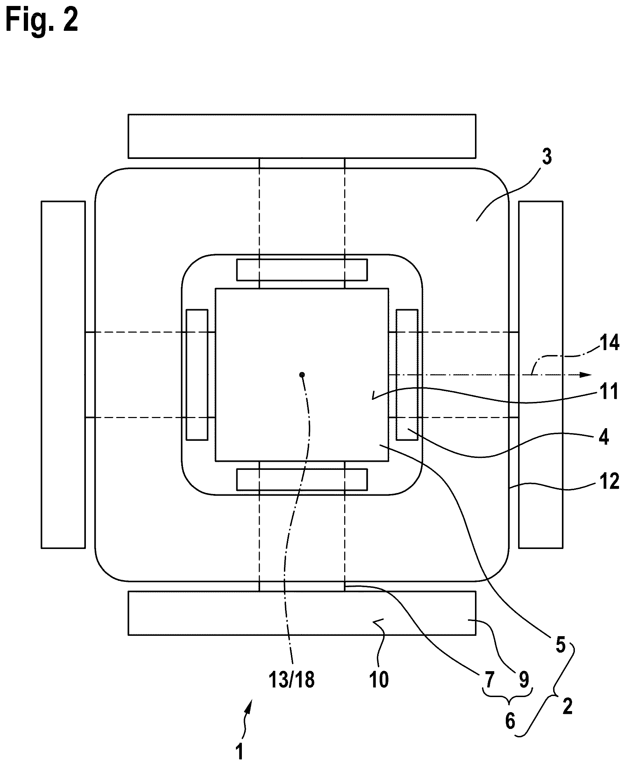

Fig. 2 shows a schematic plan view of a magnetic component 1 according to a second embodiment of the present invention.

Herein, the magnetic component 1 with the cross-potent shaped magnetic core 2 comprises four minor electrical coils 4. The minor electrical coils 4 are, per leg portion 6, disposed within the circumference 12 of the major electrical coil 3. In other words, the minor electrical coils 4 are disposed between the center portion 5 of the magnetic core 2 and a portion of the major electrical coil 3.

Preferably, no further minor electrical coils 4 are provided. In particular, no further minor electrical coils 4 are provided outside of the circumference 12 of the major electrical coil 3.

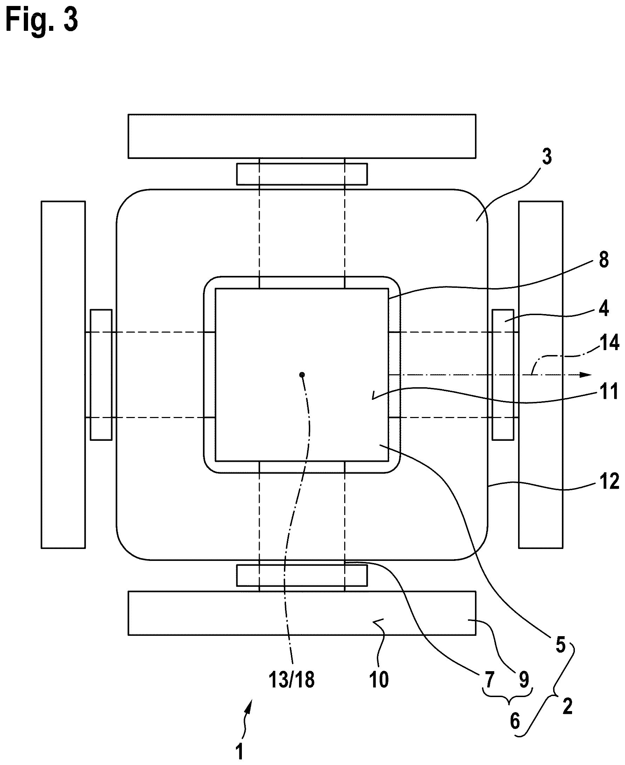

Fig. 3 shows a schematic plan view of a magnetic component 1 according to a third embodiment of the present invention.

Herein, the magnetic component 1 with the cross-potent shaped magnetic core 2 comprises four minor electrical coils 4. The minor electrical coils 4 are, per leg portion 6, disposed outside of the circumference 12 of the major electrical coil 3. In other words, the minor electrical coils 4 are disposed between a portion of the major electrical coil 3 and the second portion 9 of the respective leg portion 6.

Preferably, no further minor electrical coils 4 are provided. In particular, no further minor electrical coils 4 are provided inside of the circumference 12 of the major electrical coil 3.

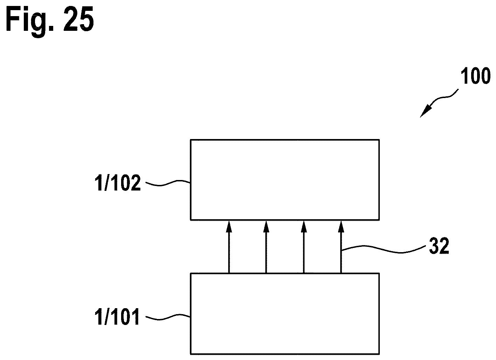

The magnetic components of embodiments one to three are preferably primary magnetic components for transmission of electrical energy to a secondary magnetic component, which receives the electrical energy by receiving a magnetic field generated by the primary magnetic component (please see Fig. 25 and its description).

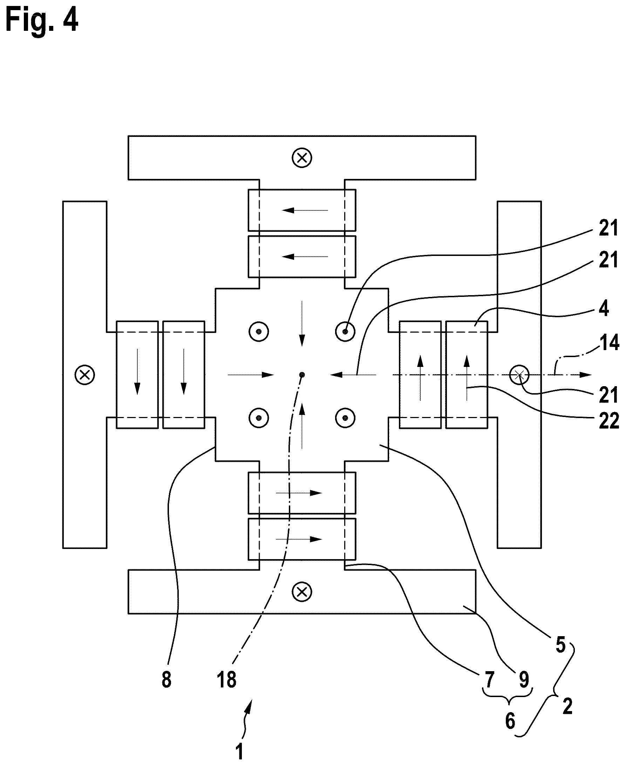

Fig. 4 shows a schematic plan view of a magnetic component 1 according to a fourth embodiment of the present invention.

Herein, the magnetic component 1 with the cross-potent shaped magnetic core 2 comprises eight minor electrical coils 4, two for each leg portion 6, and no major electrical coil 3. On the other hand, the magnetic component 1 may also comprise more or less than two minor electrical coils 4 per leg portion 6. For instance, the magnetic component 1 may comprise one or three or more minor electrical coils 4 per leg portion 6.

Further, the minor electrical coils 4 shown in Fig. 4 are, per leg portion 6, provided in sets of two and wound around the first portion 7 of the respective leg portion 6. The minor electrical coils 4 are thus disposed between the center portion 5 of the magnetic core 2 and the second portion 9 of the respective leg portion 6.

As can be taken from Fig. 4, magnetic field lines 21, which are drawn into structures of the magnetic core 2, demonstrate a flow of a magnetic field through the magnetic component 1, especially in the case that the magnetic component 1 of the present embodiment is employed as a secondary magnetic component for reception of electrical energy. Further, arrows 22 drawn into the minor electrical coils 4 demonstrate an electric current 22 flowing through these. The electric current 22 is generated by the magnetic field 21 flowing through the magnetic component 1.

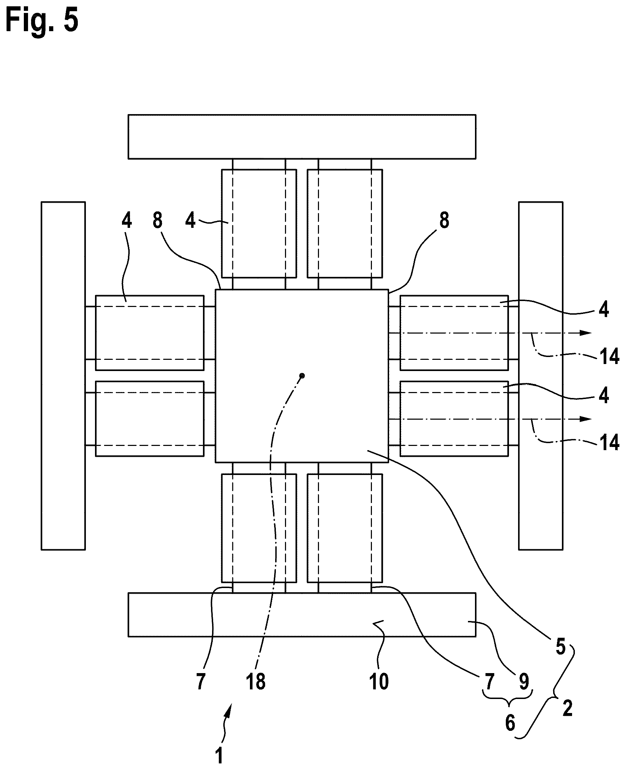

Fig. 5 shows a schematic plan view of a magnetic component 1 according to a fifth embodiment of the present invention.

Herein, the cross-potent shaped magnetic core 2 comprises four leg portions 6. In this embodiment, each leg portion 6 comprises two first portions 7, each projecting from one side surface 8 of the center portion 5 of the magnetic core 2. In other words, two first portions 7 project from the center portion 5 for each side 8 of the center portion 5 of the magnetic core 2. The leg portions 6 further each comprise one second portion 9. On the other hand, the magnetic core 2 may comprise three or more first portions 7 projecting from each side 8 of the center portion 5 of the magnetic core 2.

As shown in Fig. 5,one minor electrical coil 4 is wound around one first portion 7. In other words, the magnetic component 1 comprises eight minor electrical coils 4, each wound around one first portion 7 of the respective leg portion 6. The magnetic component 1 may comprise more than one minor electrical coil 4 wound around each first portion 7 of the respective leg portion 6. For instance, the magnetic component 1 may comprise two or three or more minor electrical coils 4 respectively per leg portion 6.

The magnetic component 1 according to this embodiment comprises no major electrical coils 3.

The magnetic components 1 of the embodiments four and five are preferably secondary magnetic components for the reception of electrical energy from a primary magnetic component.

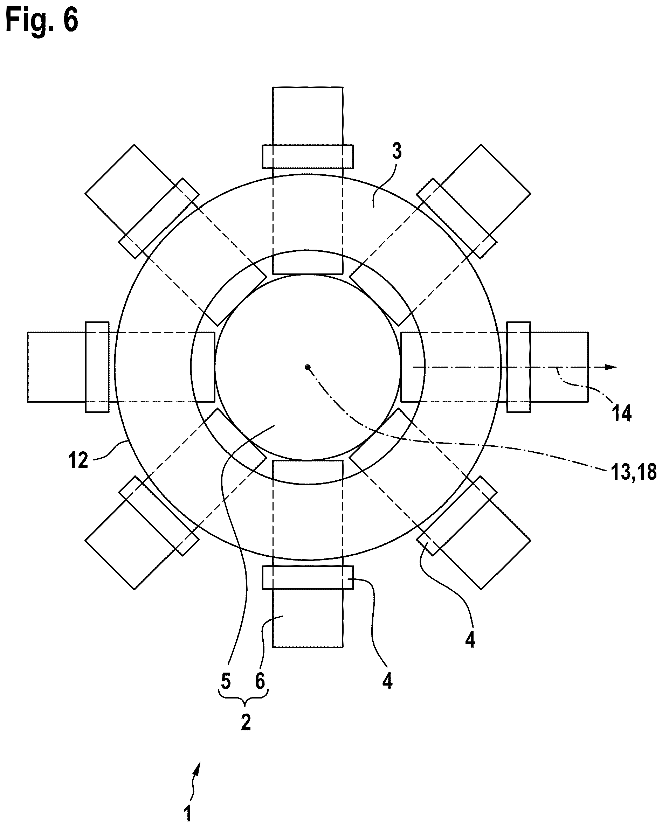

Fig. 6 shows a schematic plan view of a magnetic component 1 according to a sixth embodiment of the present invention.

The magnetic core 2 of this embodiment is star-shaped, comprising a circular center portion 5 and eight leg portions 6. The leg portions 6 respectively project from a circumference 23 of the center portion 5. The magnetic component 1 may also comprise more or less than eight leg portions 6. For example, the magnetic component 1 may comprise four, five, six, seven or nine leg portions 6.

The leg portions 6 in this embodiment are straight-bar-shaped and do not comprise crossbar-shaped second portions 9. However, crossbar-shaped second portions 9 are preferably also included herein, disposed preferably at the ends of the shown leg portions 6 opposite to the center portion 5.

Further, the end portions of the leg portions 6 abutting the center portion 5 are shown as straight, whereas the center portion 5 is circular. These end portions are preferably also formed as circular, so as to align and abut closely to the circular center portion 5.

The leg portions 6 may be attached to the center portion 5 or be formed integrally with the center portion 5.

Additionally, the magnetic component 1 includes one major electrical coil 3, wherein the major winding axis 13 of the major electrical coil 3 coincides with a center 18 of the circular center portion 5. Further, the magnetic component 1 includes, per leg portion 6, one minor electrical coil 4 wound around the leg portion 6 and disposed outside of the circumference 12 of the major electrical coil 3. The magnetic component 1 may also include, per leg portion 6, two or three or more minor electrical coils 4, especially all disposed outside of the circumference 12 of the major electrical coil 3, or at least in part, disposed on the inside of the circumference 12 of the major electrical coil 3.

The magnetic component 1 of the sixth embodiment is preferably a primary magnetic component for the transmission of electrical energy to a secondary magnetic component.

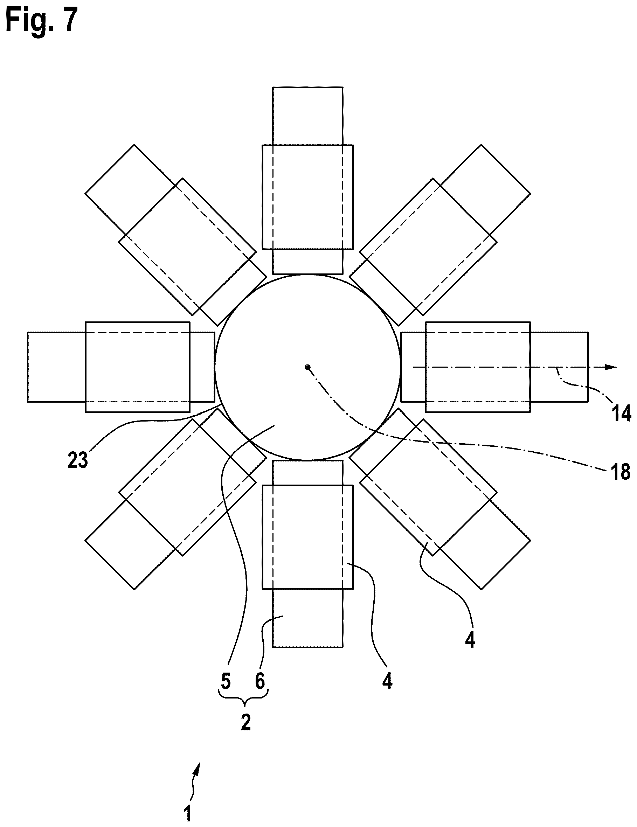

Fig. 7 shows a schematic plan view of a magnetic component 1 according to a seventh embodiment of the present invention.

Herein, the magnetic component 1 comprises the star-shaped magnetic core 2. Further, the magnetic component 1 comprises eight minor electrical coils 4, one wound around each leg portion 6. On the other hand, the magnetic component 1 may also comprise two or more minor electrical coils 4 wound around each leg portion 6.

As described above, the ends of the leg portions 6 abutting the center portion 5 are preferably round.

The magnetic component 1 of the seventh embodiment is preferably a secondary magnetic component for the reception of electrical energy from a primary magnetic component, especially for the reception of electrical energy from the magnetic component 1 of the sixth embodiment.

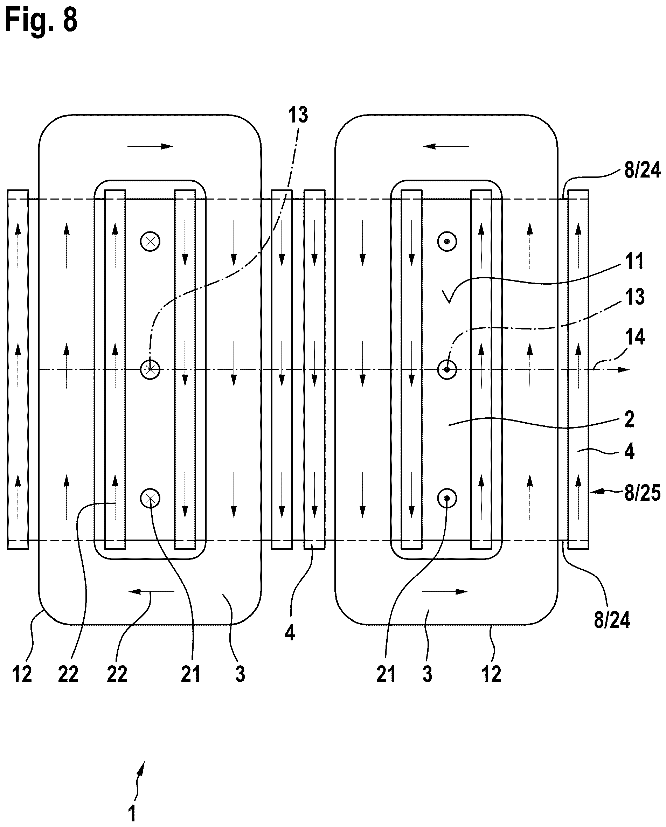

Fig. 8 shows a schematic plan view of a magnetic component 1 according to an eighth embodiment of the present invention.

Herein, the magnetic core 2 is rectangular, comprising two long sides 24 and two short sides 25, wherein the long sides 24 are longer than the short sides 25 of the magnetic core 2. This shape is also defined as "bar-shaped".

Further, the magnetic component 1 comprises two major electrical coils 3 and eight minor electrical coils 4. The major electrical coils 3 are disposed so as to be parallel to the top surface 11 of the magnetic core 2.

Herein, per major electrical coil 3, two minor electrical coils 4 are disposed within the circumference of the major electrical coil 3. Further, in total four minor electrical coils 4 are disposed outside the circumferences of the minor electrical coils 3. In particular, two minor electrical coils 4 are disposed between the major electrical coils 3. Further, one minor electrical coil 4 is disposed at each end of the long sides 24 of the magnetic core 2.

As demonstrated by the arrows 22, the major and minor electrical coils 3, 4 are electrically connected to one another such that a current of two adjacent electrical coils 3, 4 flows in the same direction. Further, as demonstrated by the arrows 21, the magnetic field is projected from a right side of the magnetic core 2 corresponding to a right major electrical coil 3 to a left side of the magnetic core 2 corresponding to a left major electrical coil 3.

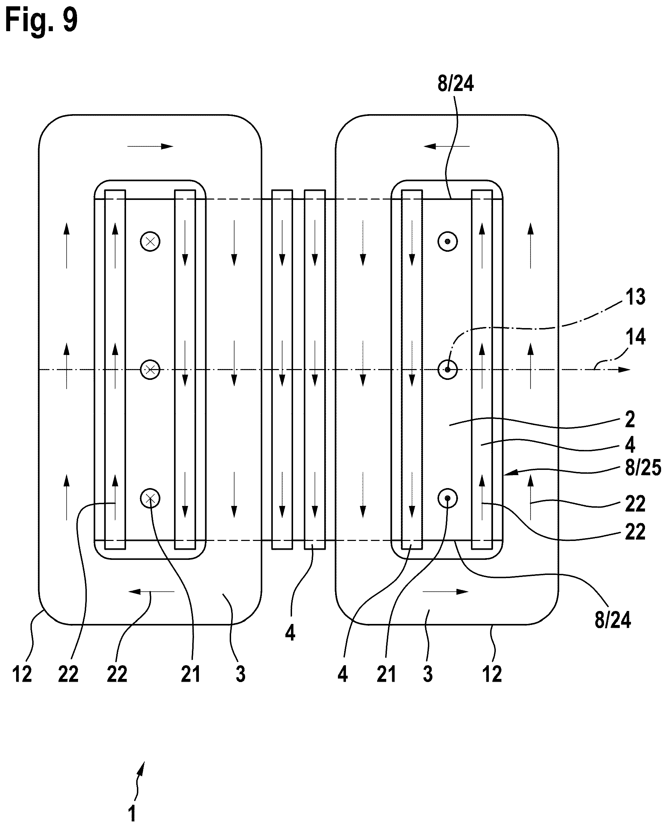

Fig. 9 shows a schematic plan view of a magnetic component 1 according to a ninth embodiment of the present invention.

Herein, the magnetic component 1 comprises the bar-shaped magnetic core 2 as well as two major electrical coils 3 and six minor electrical coils 4. The magnetic component 1 of this embodiment does not include the minor electrical coils 4 at the ends of the long sides 24 of the magnetic core 2.

In other words, the magnetic component 1 comprises, per major electrical coil 3, two minor electrical coils 4 each on the inside of the circumference 12 of the major electrical coil 3. Further, the magnetic component 1 comprises two minor electrical coils 4 between the major electrical coils 3. Preferably, the magnetic component 1 comprises no further minor electrical coils 4.

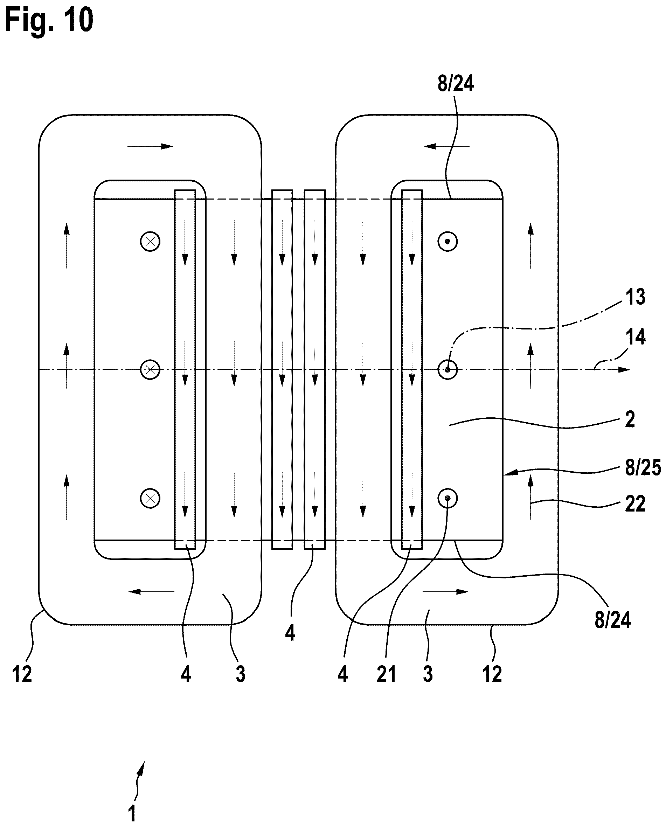

Fig. 10 shows a schematic plan view of a magnetic component 1 according to a tenth embodiment of the present invention.

Herein, the magnetic component 1 comprises the bar-shaped magnetic core 2 as well as two major electrical coils 3 and four minor electrical coils 4. One minor electrical coil 4 is disposed inside the circumference 12 of each major electrical coil 3. Two minor electrical coils 4 are disposed between the two major electrical coils 3.

Preferably, no further minor electrical coils 4 are provided.

The structures shown in embodiments eight to ten can be repeated. In other words, the magnetic core 2 may be formed with longer long sides 24 and such a magnetic component may comprise three or more major electrical coils 3, with the respective minor electrical coils 4 disposed within their circumferences 12 and between the respective major electrical coils 3.

The magnetic components 1 of the embodiments eight to ten are preferably primary magnetic components for the transmission of electrical energy to a secondary magnetic component.

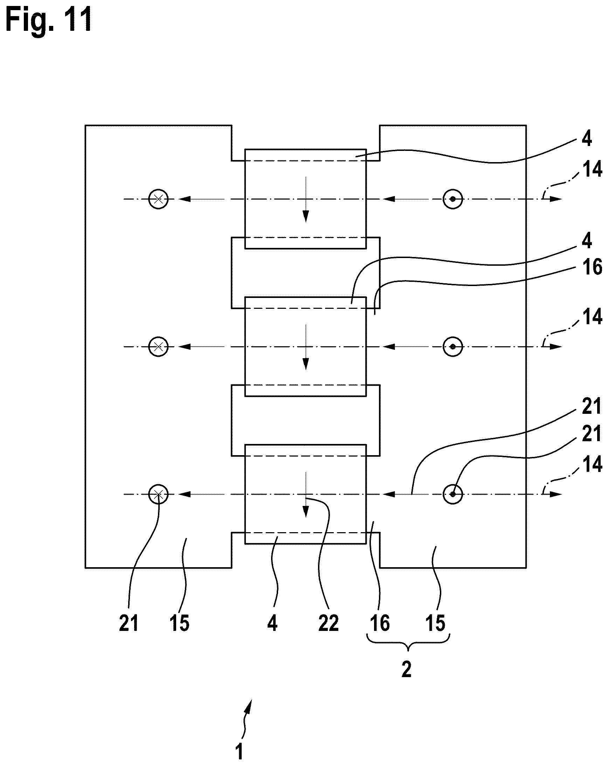

Fig. 11 shows a schematic plan view of a magnetic component 1 according to an eleventh embodiment of the present invention.

The magnetic component 1 of the present embodiment comprises a ladder-shaped magnetic core 2. Therein, the magnetic core 2 comprises two main portions 15 corresponding to side rails of the ladder shape. Further, the magnetic core 2 comprises three connecting portions 16 corresponding to rungs of the ladder shape. The magnetic core 2 may comprise one or two, or more than three of the connecting portions 16.

The magnetic component 1 further comprises three minor electrical coils 4, each wound around one connecting portion 16. On the other hand, the magnetic component 1 may also comprise more than one (for example two or three or more) minor electrical coil 4 wound around each connecting portion 16.

As demonstrated by the field lines 21, the magnetic field 21 projects from one main portion 15 and enters the other main portion 16. Further, the magnetic field 21 flows from one main portion 15 to the other main portion 16 along the connecting portions 16. Thereby, a current 22 is induced in the minor electrical coils 4.

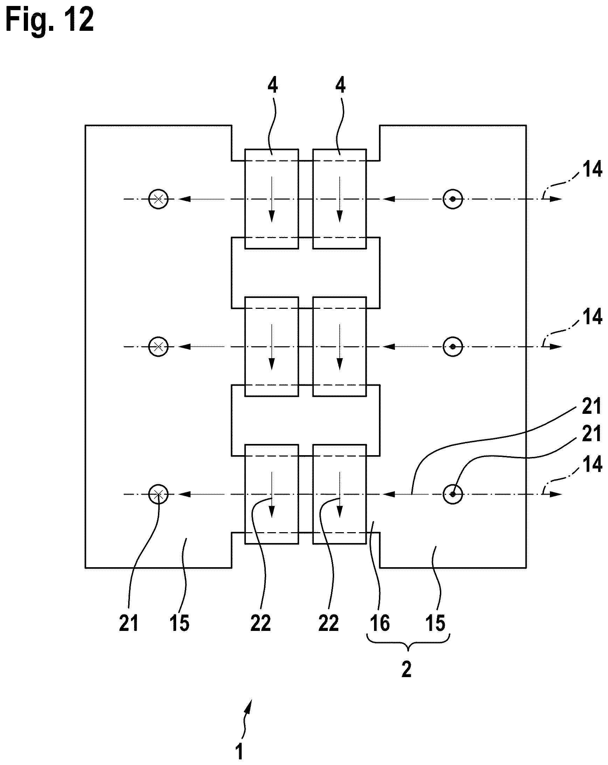

Fig. 12 shows a schematic plan view of a magnetic component 1 according to a twelfth embodiment of the present invention.

Herein, the magnetic component 1 comprises two minor electrical coils 4 per connecting portion 16 between the main portions 15. In total, the magnetic component 1 comprises six minor electrical coils 4.

In embodiments eleven and twelve, the number of main portions 15 and number of connecting portions 16 can vary. For instance, the magnetic core 2 may comprise two main portions 15 and one connecting portion 16, or two connecting portions 16, or four or more connecting portions 16, preferably each with one or more minor electrical coils 4 wound around them. Further, the magnetic core 2 may comprise three main portions 15, with connecting portions 16 between a first main portion 15 and a second main portion 15 as well as connecting portions 16 between the second main portion 15 (as a middle main portion 15) and a third main portion (not shown). Therein, the number of connecting portions 16 respectively connecting two main portions 15 may also vary between different main portions 15. In other words, two connecting portions 16 may connect the first and second main portions 15, whereas only one (or more) connecting portions (not shown) connect the second main portion 15 and the third main portion.

The magnetic components 1 of the embodiments eleven and twelve are preferably secondary magnetic components.

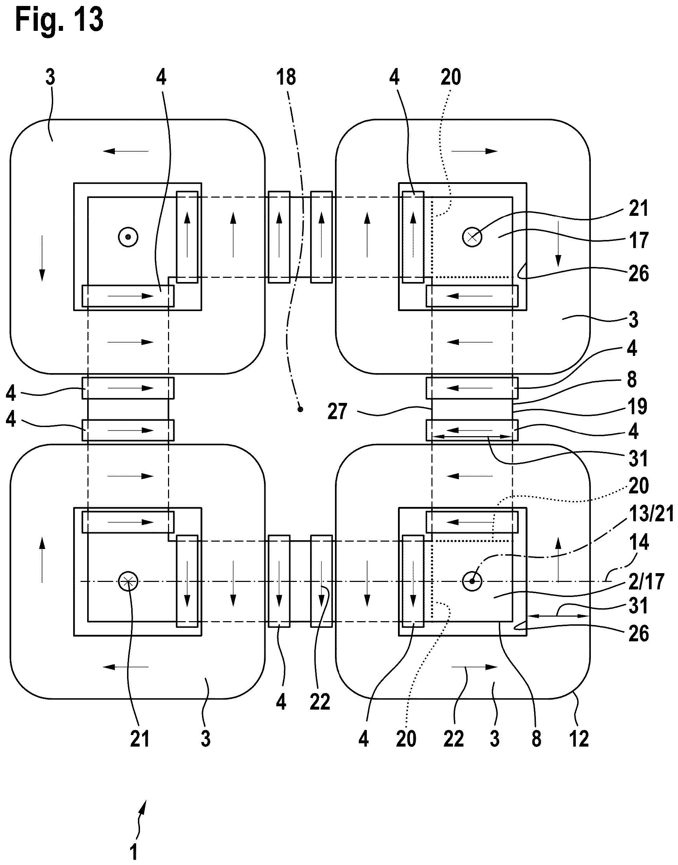

Fig. 13 shows a schematic plan view of a magnetic component 1 according to a thirteenth embodiment of the present invention.

The magnetic component 1 of the present embodiment comprises a square ring-shaped magnetic core 2. Further, the magnetic component 1 comprises four major electrical coils 3 and sixteen minor electrical coils 4. In other words, the magnetic component 1 comprises four minor electrical coils 4 for each major electrical coil 3. However, the magnetic component 1 may comprise one or two or three or five or more minor electrical coils 4 for each major electrical coil 3.

The magnetic core 2 comprises four corner portions 17. The corner portions 17 are defined by dotted lines 20 shown in Fig. 13.

Each major electrical coil 3 is disposed such that its major winding axis 13 coincides with a center of one corner portion 17.

Further as shown in Fig. 13, two minor electrical coils 4 are disposed in each circumference 12 of one major electrical coil 3. Two minor electrical coils 4 are disposed between two respectively adjacent major electrical coils 3. The minor winding axis 14 of the minor electrical coils 4 is parallel to a side 8 of the magnetic core 2, around which they are wound.

As demonstrated by the field lines 21, the magnetic field 21 projects from one corner portion 17 and enters its two adjacent corner portions 17.

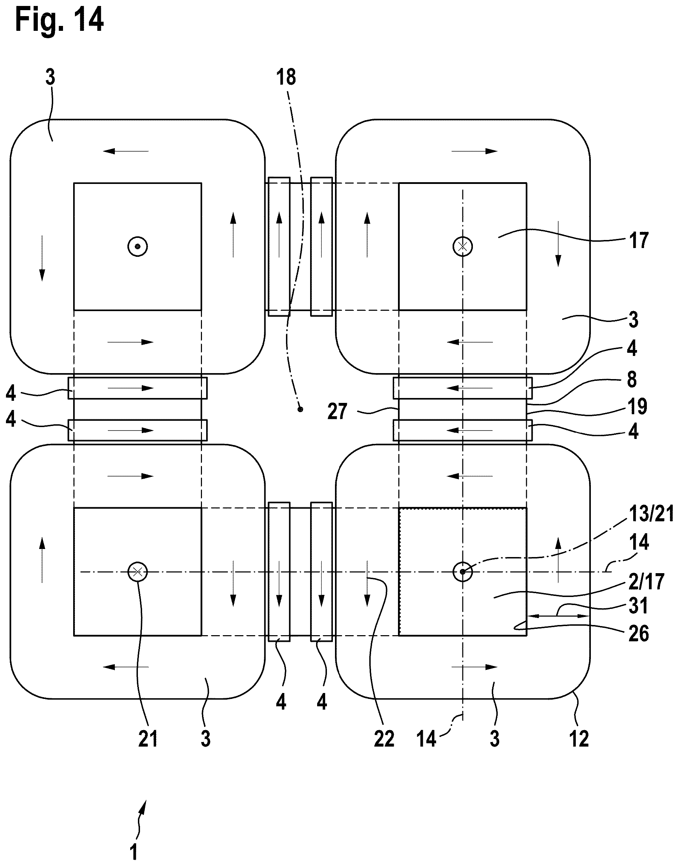

Fig. 14 shows a schematic plan view of a magnetic component 1 according to a fourteenth embodiment of the present invention.

Herein, the magnetic component 1 with the square ring-shaped magnetic core 2 comprises minor electrical coils 4 only between the major electrical coils 3. Herein, due to the lack of minor electrical coils 4 within the circumference of the major electrical coils 3, a ring-thickness 31, i.e. a distance from an inner circumference 26 to the outer circumference 12, in other words a thickness in a direction perpendicular to the major winding axis 13 of the major electrical coil 3, is greater as compared to embodiment thirteen. The magnetic component 1, as shown in Fig. 14, comprises two minor electrical coils 4 for each major electrical coil 3. However, the magnetic component 1 may also comprise one or three or more minor electrical coils 4 for each major electrical coil 3, wherein these are especially (as shown in Fig. 14 with respect to two minor electrical coils 4 for each major electrical coil 3) arranged between the major electrical coils 3.

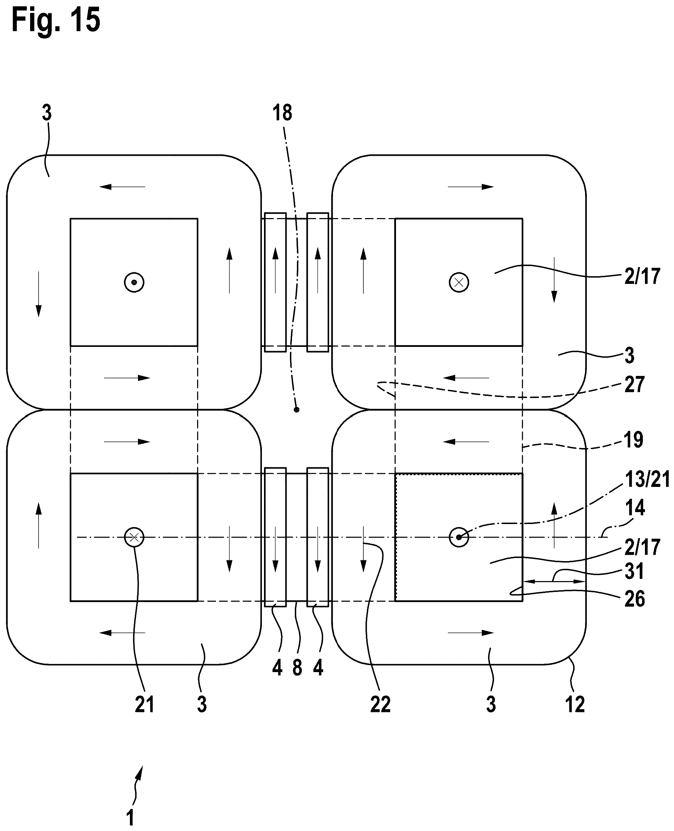

Fig. 15 shows a schematic plan view of a magnetic component 1 according to a fifteenth embodiment of the present invention.

As can be taken from fig. 15, the magnetic component 1 comprises the square ring-shaped magnetic core 2 as well as four major electrical coils 3 and four minor electrical coils 4.

The minor electrical coils 4 are disposed between two adjacent major electrical coils 3. The major electrical coils 3, between which no minor electrical coils 4 are provided (left-top and left-bottom as well as right-top and right-bottom, respectively) abut one another. With this configuration, as compared to embodiments thirteen and fourteen, the ring-thickness 31 of the major electrical coils 3 between their inner circumference 26 and their outer circumference 12 is further increased. On the other hand, between major electrical coils 3 which do not abut one another, the magnetic component 1 may comprise one or three or more minor electrical coils 4.

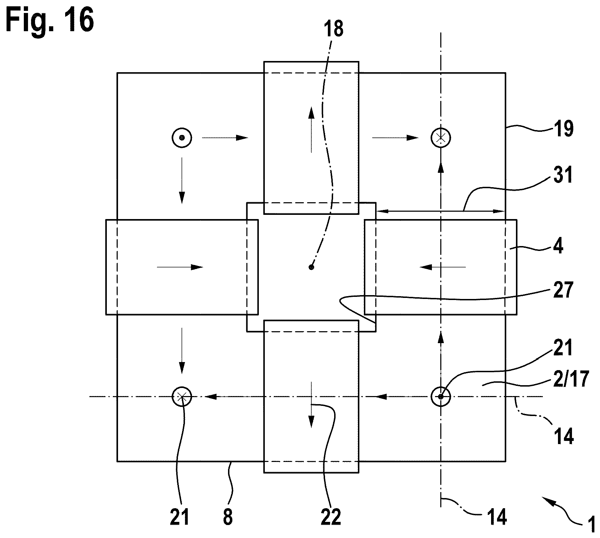

Fig. 16 shows a schematic plan view of a magnetic component 1 according to a sixteenth embodiment of the present invention.

Herein, the magnetic component 1 comprises the square ring-shaped magnetic core 2 along with four minor electrical coils 4. The magnetic component 1 does not comprise any major electrical coils 3. The magnetic component 1 may also comprise more than one (for instance, two or three or more) minor electrical coil 4 per side of the square ring-shaped magnetic core 2.

With this configuration, a ring-thickness 31, i.e. a distance between an inner circumference 27 and an outer circumference 19 of the magnetic core 2, can be advantageously increased with respect to that of the embodiments 12 to 13.

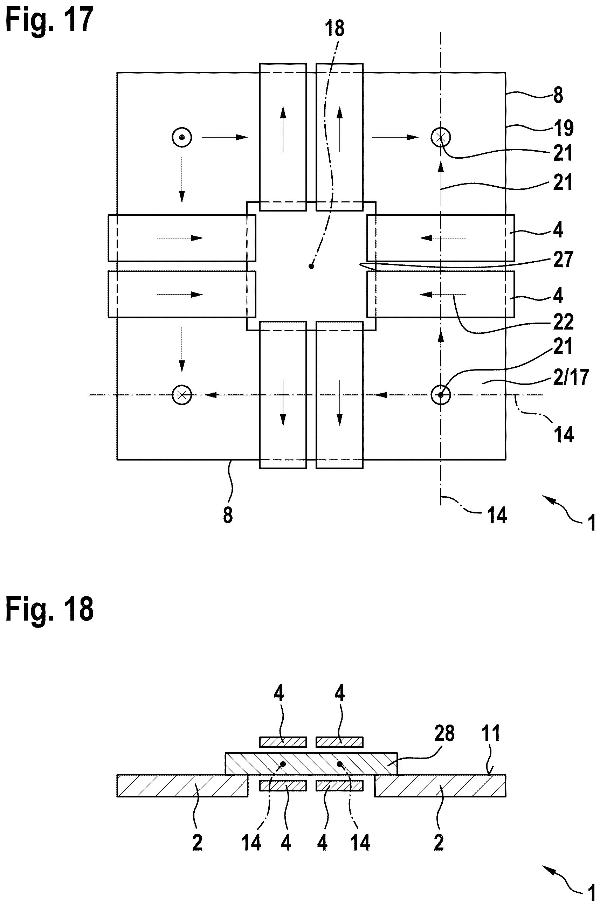

Fig. 17 shows a schematic plan view of a magnetic component 1 according to a seventeenth embodiment of the present invention.

Herein, the magnetic component 1 comprises two minor electrical coils 4 disposed respectively between two adjacent corner portions 17 of the square ring-shaped magnetic core 2. In total, the magnetic component 1 of this embodiment comprises thus eight minor electrical coils 4. The magnetic component 1 may also comprise more than two minor electrical coils 4 disposed respectively between two of said corner portions 17.

Fig. 18 shows a schematic cross-sectional drawing of the magnetic component 1 according to the seventeenth embodiment of the present invention.

As can be taken from Fig. 18, the magnetic core 2 comprises a raised portion 28. For each set of two minor electrical coils 4 (see: Fig. 17), the magnetic core 2 comprises one raised portion 28. Therein, the raised portions 28 are disposed at portions of the magnetic core 2, around which the minor electrical coils 4 are wound.

As shown in Fig. 18, the raised portions 28 correspond to magnetic core 2 portions which are disposed on top of the top surface 11 of the magnetic core 2 at non-raised portions thereof. The raised portions 28 are preferably formed integrally with non-raised portions of the magnetic core 2.

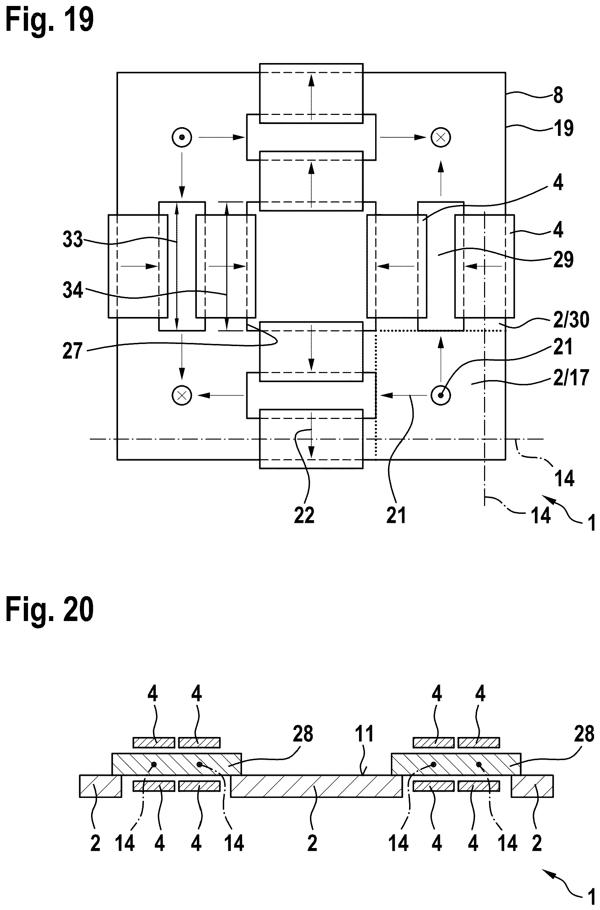

Fig. 19 shows a schematic plan view of a magnetic component 1 according to an eighteenth embodiment of the present invention.

As can be taken from Fig. 19, the magnetic core 2 comprises slits 29 formed therein, especially between adjacent corner portions 17 thereof. The slits 29 each define connecting portions 30 of the magnetic core 2. In particular, each slit defines two connecting portions 30, which connect adjacent corner portions 17 of the magnetic core 2. Herein, the corner portions 17 are defined by the ends of the slits 29. The magnetic core 2 may also comprise more than one (for instance, two or three or more) slit 29 per side of the magnetic core 2.

The magnetic component 1 comprises eight minor electrical coils 4, one wound around each connecting portion 30 of the magnetic core 2 and disposed between adjacent corner portions 17 thereof. The magnetic component 1 may comprise more than one (for instance two or three or more) minor electrical coil 4 wound around each connection portion 30 of the magnetic core 2.

As can be taken from Fig. 19, a length 33 of each of the slits 29 is in this example equal to a length 34 of the respective inner side surface of the magnetic core 2, which forms a part of the inner circumference 27 of the magnetic core 2. The length 33 of each of the slits 29 may also be slightly (for instance, 1.2 times) larger or slightly smaller (for instance, 0.8 times) than the length 34 of the respective inner side surface of the magnetic core 2.

Fig. 20 shows a schematic cross-sectional drawing of the magnetic component 1 according to the eighteenth embodiment of the present invention.

As can be taken from Fig. 20, the magnetic core 2 further includes the raised portions 28. The raised portions 28, although not visible in cross-section, comprise the slits 29 and connecting portions 30 shown in Fig. 19.

The magnetic components 1 of embodiments thirteen to fifteen are preferably primary magnetic components. The magnetic components 1 of embodiments sixteen to eighteen are preferably secondary magnetic components.

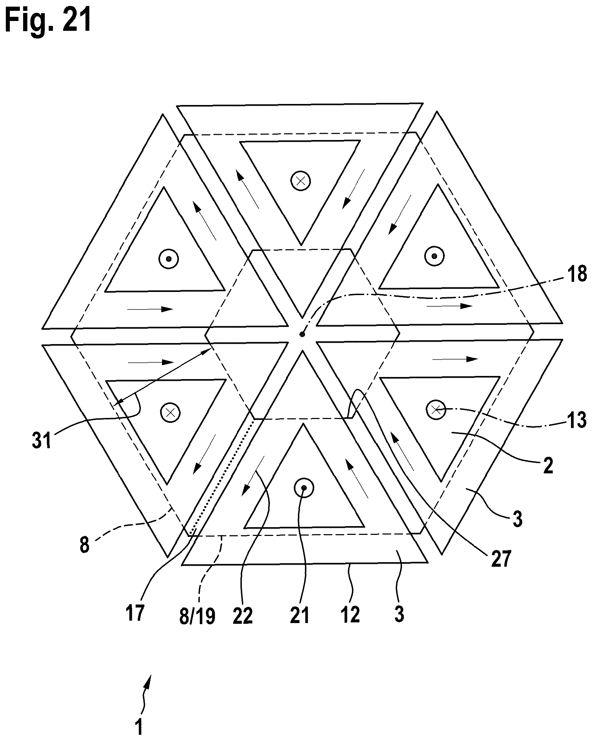

Fig. 21 shows a schematic plan view of a magnetic component 1 according to a nineteenth embodiment of the present invention.

The magnetic component 1 of the present embodiment comprises a hexagonal ring-shaped magnetic core 2 and six major electrical coils 3. The magnetic component 1 thus comprises one major electrical coil 3 for each side 8 of the magnetic core 2. Corners 17 are defined between the sides 8 of the magnetic core 2. The magnetic component 1 may comprise more than one (for instance, two or three or more) major electrical coils 3 for each side 8 of the magnetic core 2.

The major electrical coils 3 are tapered towards the center 18 of the magnetic core 2. In other words, the major electrical coils 3 are tapered from the outer circumference 19 towards the inner circumference 27 of the magnetic core 2.

The major electrical coils 3 of this embodiment are triangle-shaped. The major winding axis 13 of each major electrical coil 3 coincides with a center of each side 8 of the magnetic core 2. A gap is formed at each corner 17 between adjacent major electrical coils 3.

As shown herein, the magnetic field 21 projects from one major electrical coil 3 into one, especially only one, adjacent major electrical coil 3.

The magnetic component 1 of the nineteenth embodiment is preferably a primary magnetic component 1.

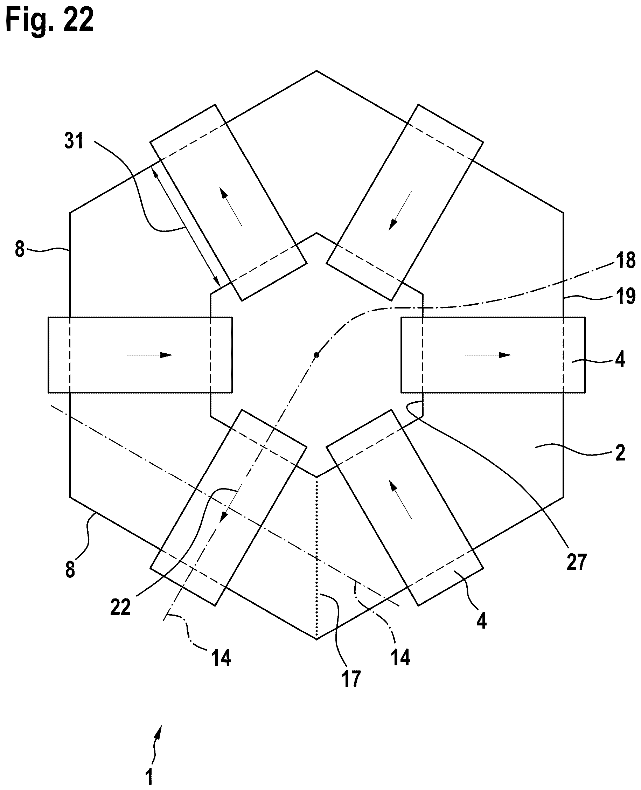

Fig. 22 shows a schematic plan view of a magnetic component 1 according to a twentieth embodiment of the present invention.

Herein, the magnetic component 1 comprising the hexagonal ring-shaped magnetic core 2 comprises six minor electrical coils 4, one wound around each side 8 thereof. The minor winding axis 14 is parallel to an extension direction of each corresponding side 8 of the magnetic core 2. The magnetic component 1 may comprise more than one (for instance two or three or more) minor electrical coils 4 wound around each side 8 of the magnetic core 2.

Further, the ring-thickness 31 of the magnetic core 2 in the present embodiment is preferably larger than the ring-thickness 31 of the magnetic core 2 of the magnetic component 1 of embodiment nineteen.

Further, the minor electrical coils 4 shown in Fig. 22 may also be included in the magnetic component 1 of the nineteenth embodiment (Fig. 21), especially at corner portions 17 of the magnetic core 2 thereof.

The magnetic component of the twentieth embodiment is preferably a secondary magnetic component for the reception of electrical energy from a primary magnetic component, especially for the reception of electrical energy from the magnetic component 1 of the nineteenth embodiment.

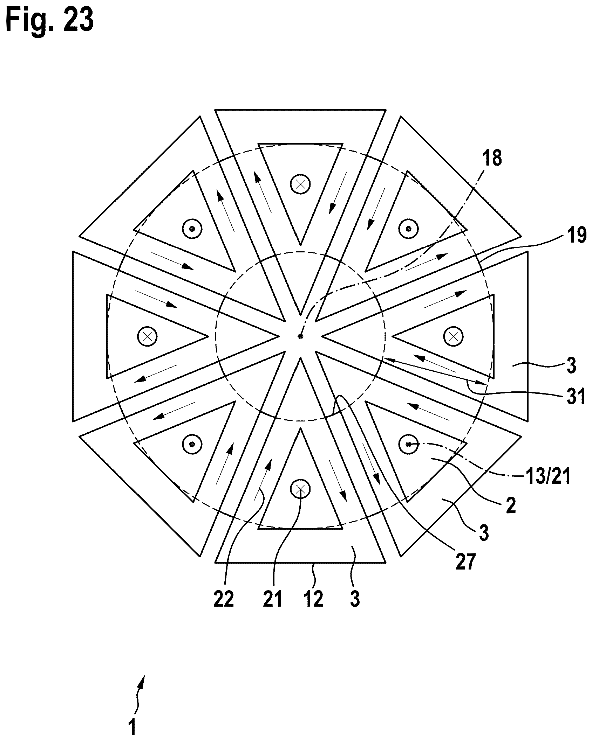

Fig. 23 shows a schematic plan view of a magnetic component 1 according to a twenty-first embodiment of the present invention.

Herein, the magnetic component 1 comprises a circular ring-shaped magnetic core 2. Further, the magnetic component 1 comprises eight tapered major electrical coils 3. The major electrical coils 3 are tapered towards the center 18 of the magnetic core 2. The major electrical coils 3 are distributed evenly around the circular magnetic core 2. The magnetic component 1 may comprise less or more than eight major electrical coils 3. For instance, the magnetic component 1 may comprise one or more, especially four or six, or more than eight major electrical coils 3, especially distributed evenly around the magnetic core 2.

As shown herein, the magnetic field 21 projects from one major electrical coil 3 into one, especially only one, adjacent major electrical coil 3.

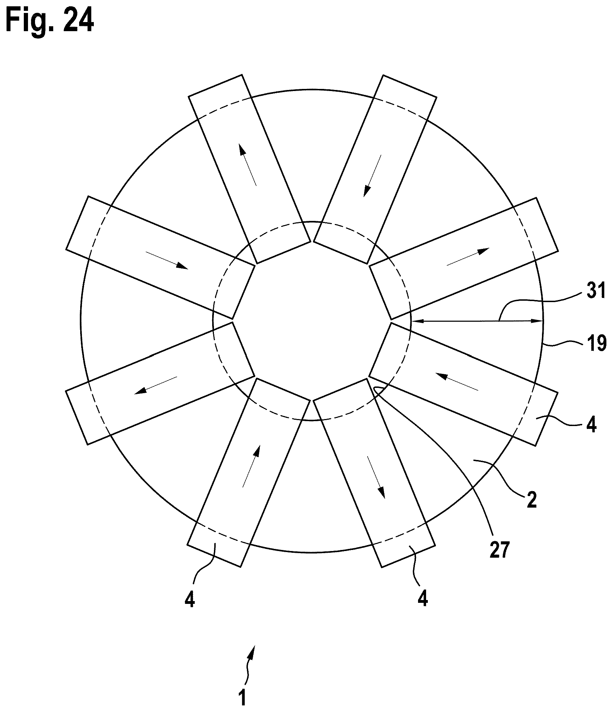

Fig. 24 shows a schematic plan view of a magnetic component 1 according to a twenty-second embodiment of the present invention.

Herein, the magnetic component 1 comprises the circular ring-shaped magnetic core 2 as well as eight minor electrical coils 4. The minor electrical coils 4 are distributed evenly around the circular magnetic core 2. The magnetic component 1 may comprise more or less than eight minor electrical coils 4. For instance, the magnetic component 1 may comprise one or more, especially four or six or more than eight minor electrical coils 4, especially distributed evenly around the magnetic core 2.

Further, the minor electrical coils 4 shown in Fig. 24 may also be provided in the magnetic component 1 of embodiment twenty-one (Fig. 23), especially between the major electrical coils 3.

Further, the ring-thickness 31 is thicker in the present embodiment than in embodiment twenty-one.

Preferably, the magnetic component 1 of embodiment twenty-one is a primary magnetic component, whereas the magnetic component 1 of embodiment twenty-two is preferably a secondary magnetic component. In particular, the magnetic component 1 of embodiment twenty-two may comprise the same number of minor electrical coils 4 as the number of major electrical coils 3 in the magnetic component 1 of the twenty-first embodiment.

In all foregoing embodiments, the magnetic components 1 comprising the major electrical coils 3 are preferably primary magnetic components, whereas those magnetic components 1 comprising no major electrical coils 3 are preferably secondary magnetic components.

Fig. 25 shows a schematic diagram of a transformer 100 of the present invention.

The transformer 100 comprises a primary magnetic component 101 and a secondary magnetic component 102. Energy is transferred via magnetic field lines 32 from the primary magnetic component 101 to the secondary magnetic component 102.

The transformer is, for example, a transformer for wireless charging. For example, the primary magnetic component 101 may be included in a wireless charger, whereas the secondary magnetic component 102 may be included in a mobile phone or an automobile.

As described in the foregoing, the magnetic components 1 including major electrical coils 3 are preferably employed as primary magnetic components 101 in the transformer 100 of the present invention. Further, those magnetic components 1 of the foregoing embodiments comprising no major electrical coils 3 are preferably employed as secondary magnetic components 102 in the transformer 100 of the present invention.

Alternatively, it is to be understood that any one of the magnetic components 1 according to any one of the embodiments one to twenty-two are preferably employed as primary magnetic components 101. Further, any one of the magnetic components 1 according to any one of the embodiments one to twenty-two are preferably employed as secondary magnetic components 102.

In addition to the foregoing written explanation of the invention, it is explicitly referred to figures 1 to 25, which in detail show features of the invention.

The present invention can also be described by means of the following clauses:
1. Magnetic component (1), especially for a wireless charging transformer, comprising:
   - a magnetic core (2); and
   - at least one flat pre-wound major electrical coil (3) disposed on the magnetic core (2) and/or
   - at least one minor electrical coil (4) wound around the magnetic core (2).
2. Magnetic component (1) according to clause 1, wherein the magnetic core (2) comprises a center portion (5) and at least four leg portions (6) projecting from the center portion (5).
3. Magnetic component (1) according to clause 2, wherein the major electrical coil (3) is disposed so as to surround the center portion (5) of the magnetic core (2).
4. Magnetic component (1) according to clauses 2 or 3, comprising a plurality of the minor electrical coils (4), wherein the minor electrical coils (4) are respectively wound around the leg portions (6).
5. Magnetic component (1) according to clauses 2 to 4, wherein the magnetic core (2) has a cross-potent-shape with a plurality of T-shaped leg portions (6) projecting from the center portion (5), wherein each T-shaped leg portion (6) comprises a first portion (7) connected to a side (8) of the center portion (5) and a second portion (9) as a crossbar, especially at the end of the first portion (7), and wherein the minor electrical coils (4) are especially respectively wound around the first portion (7) of the T-shaped leg portions (6).
6. Magnetic component (1) according to clause 5, wherein a combined top surface area (10) of all second portions (9) of the T-shaped leg portions (6) is X and a top surface area (11) of the center portion (5) is Y, wherein a ratio of X/Y is between and including 0.8 and 1.2, preferably 0.9 and 1.1, or is more preferably 1.
7. Magnetic component (1) according to any one of clauses 5 or 6, wherein the minor electrical coils (4) are wound around the T-shaped leg portions (6) between the center portion (5) of the magnetic core (2) and a portion of the major electrical coil (3) and/or between the portion of the major electrical coil (3) and the second portion (9) of the T-shaped leg portions (6).
8. Magnetic component according to any one of clauses 2 to 4, wherein the magnetic core (2) has a star-shape comprising five or more, especially T-shaped, leg portions (6) projecting from the center portion (5).
9. Magnetic component (1) according to any one of clauses 1 to 4, comprising at least two of the major electrical coils (3) and a plurality of the minor electrical coils (4), wherein the minor electrical coils (4) are respectively wound around the magnetic core (2) within a circumference (12) of the major electrical coils (3) and/or between the major electrical coils (3).
10. Magnetic component (1) according to clause 9, wherein the minor electrical coils (4) are wound so as to respectively have a minor winding axis (14), around which the minor electrical coil (4) is wound, perpendicular to a major winding axis (13), around which the major electrical coils (3) are respectively wound, of the major electrical coils (3).
11. Magnetic component (1) according to clause 1, wherein the magnetic core (2) has a ladder shape with at least two main portions (15), as side rails of the ladder shape, and at least one connecting portion (16), as a rung of the ladder shape, connecting the at least two main portions (15), wherein the minor electrical coil(s) (4) are preferably respectively wound around the connecting portion(s) (16).
12. Magnetic component (1) according to clause 1, wherein the magnetic core (2) has a ring-shape, especially a rectangular ring-shape or a circular ring-shape or a five or more sided ring-shape.
13. Magnetic component (1) according to clause 12, wherein the magnetic core (2) is rectangular ring-shaped, the magnetic component (1) comprising four major electrical coils (3) each disposed so as to surround a corner (17) of the magnetic core (2).
14. Magnetic component (1) according to clause 13, further comprising a plurality of minor electrical coils (4) respectively disposed within the circumference (17) of each major electrical coil (3), and/or a plurality of minor electrical coils (4) respectively disposed between major electrical coils (3).
15. Magnetic component (1) according to clause 12, wherein the magnetic core (2) is circular or five or more sided ring-shaped, the magnetic component (1) comprising a plurality of major electrical coils (3) respectively tapered towards a center (18) of the magnetic core (2), wherein especially one major electrical coil (3) and/or one minor electrical coil (4) is provided for each side (8) of the magnetic core (2).
16. Transformer (100), especially for wireless charging, comprising:
   - at least one magnetic component (1) according to any one of the foregoing clauses as a primary magnetic component (101) for transmission of electrical power; and/or
   - at least one magnetic component (1) according to any one of the foregoing clause as a secondary magnetic component (102) for reception of electrical power from the primary magnetic component (101).

### Reference signs

- 1: magnetic component
- 2: magnetic core
- 3: major electrical coil
- 4: minor electrical coil
- 5: center portion
- 6: leg portion
- 7: first portion of leg portion
- 8: side of magnetic core
- 9: second portion of leg portion
- 10: top surface of second portion
- 11: top surface of center portion
- 12: circumference of major electrical coil
- 13: major winding axis
- 14: minor winding axis
- 15: main portion of ladder shape
- 16: connecting portion of ladder shape
- 17: corner of magnetic core
- 18: center of magnetic core
- 19: outer circumference of magnetic core
- 20: dotted line defining corner portion
- 21: magnetic field lines
- 22: electric current
- 23: circumference of center portion
- 24: long side of magnetic core
- 25: short side of magnetic core
- 26: inner circumference of major electrical coil
- 27: inner circumference of the magnetic core
- 28: raised portion
- 29: slit
- 30: slit connecting portion
- 31: ring-thickness
- 32: energy transfer in transformer
- 33: length of slit
- 34: length of inner side of magnetic core
- 100: transformer
- 101: primary magnetic component
- 102: secondary magnetic component

## Claims

1. Magnetic component (1), especially for a wireless charging transformer, comprising:
• a magnetic core (2); and
• at least one flat pre-wound major electrical coil (3) disposed on the magnetic core (2) and
• at least one minor electrical coil (4) wound around the magnetic core (2),
• wherein the magnetic core (2) comprises a center portion (5)
wherein the magnetic core (2) has a star-shape comprising five or more, especially T-shaped, leg portions (6) projecting from the center portion (5).

2. Magnetic component (1) according to claim 1, wherein the major electrical coil (3) is disposed so as to surround the center portion (5) of the magnetic core (2).

3. Magnetic component (1) according to claims 1 or 2, comprising a plurality of the minor electrical coils (4), wherein the minor electrical coils (4) are respectively wound around the leg portions (6).

4. Magnetic component (1), especially for a wireless charging transformer, comprising:
• a magnetic core (2); and
• at least one flat pre-wound major electrical coil (3) disposed on the magnetic core (2) and/or
• at least one minor electrical coil (4) wound around the magnetic core (2),
wherein the magnetic core (2) has a circular ring-shape or a five or more sided ring-shape.

5. Magnetic component (1) according to claim 4, wherein the magnetic component (1) comprising a plurality of major electrical coils (3) respectively tapered towards a center (18) of the magnetic core (2), wherein especially one major electrical coil (3) and/or one minor electrical coil (4) is provided for each side (8) of the magnetic core (2).

6. Magnetic component (1), especially for a wireless charging transformer, comprising:
• a magnetic core (2); and
• at least one flat pre-wound major electrical coil (3) disposed on the magnetic core (2) and/or
• at least one minor electrical coil (4) wound around the magnetic core (2),
wherein the magnetic core (2) is rectangular ring-shaped, the magnetic component (1) comprising four major electrical coils (3) each disposed so as to surround a corner (17) of the magnetic core (2).

7. Magnetic component (1) according to claim 6, further comprising a plurality of minor electrical coils (4) respectively disposed within the circumference (17) of each major electrical coil (3), and/or a plurality of minor electrical coils (4) respectively disposed between major electrical coils (3).

8. Transformer (100), especially for wireless charging, comprising:
• at least one magnetic component (1) according to any one of the foregoing claims as a primary magnetic component (101) for transmission of electrical power; and/or
• at least one magnetic component (1) according to any one of the foregoing claims as a secondary magnetic component (102) for reception of electrical power from the primary magnetic component (101).
